# EUROPEAN PATENT SPECIFICATION

(11) **EP 2 843 310 B1**
(45) Date of publication and mention of the grant of the patent: **30.05.2018**
(21) Application number: 13782106.2
(22) Date of filing: 27.03.2013
(51) Int. Cl.: F23K 5/00, F16K 3/08

(54) **GAS CONTROL VALVE**
GASREGELVENTIL
SOUPAPE DE COMMANDE DE GAZ

(30) Priority: 27.04.2012 JP 2012102766
(43) Date of publication of application: 04.03.2015
(73) Proprietor: Mikuni Corporation, Tokyo 101-0021 (JP)
(72) Inventor: SATO, Hirokazu, Iwate-gun Iwate 020-0188 (JP); OKUDERA, Taichi, Iwate-gun Iwate 020-0188 (JP)
(74) Representative: Vossius & Partner Patentanwälte Rechtsanwälte mbB
(86) International application number: PCT/JP2013/058958
(87) International publication number: WO 2013/161491

(56) References cited:
- JP-A- 2002 303 418
- JP-A- 2002 323 218
- JP-A- 2002 323 218
- JP-A- 2004 101 077
- JP-A- 2005 261 066
- JP-A- 2006 189 231
- JP-A- 2006 189 231
- JP-A- 2006 215 778
- JP-A- 2008 064 210
- JP-A- 2010 266 151
- JP-A- 2010 266 151
- JP-A- 2011 196 416

## Description

### TECHNICAL FIELD

The present invention relates to a gas control valve which controls a supply amount of a fuel gas to a gas burner of gas equipment.

### BACKGROUND ART

In general, a flow rate control valve for controlling a gas supply flow rate and a safety valve for blocking gas supply are arranged in series in gas equipment such as a gas stove.

Conventionally, there has been proposed a gas valve in which open-close operations of a flow rate control valve and a safety valve are performed with one motor (for example, see Patent Literature 1). In the gas valve disclosed in Patent Literature 1, a flow rate control valve includes a shutoff-function-provided rotating member to prohibit gas communication in a given rotational angular range of a motor. The rotating member includes a rotary disk which is linked to a motor rotary shaft and a fixed disk which has a plurality of communication holes whose sizes are different to each other for controlling a gas flow rate.

The rotational angular range of the motor in which gas communication is prohibited is a range (safety valve operation range) from starting of advancing of an operation rod which holds the safety valve to retracting thereof. In the gas valve in Patent Literature 1, first, owing to rotation of the motor, the operation rod is advanced along with rotation of a cam member which is attached to a rotary shaft of the motor and the safety valve is opened. Subsequently, the operation rod is retracted to an original position with rotation of the cam member by further rotating the motor in the same direction while the safety valve is kept in an opened state by an electromagnet.

The disk closing faces are set so that a communication port of the rotary disk and a communication port of the fixed disk are prevented from being matched in position during the above operation of the safety valve to prevent a gas from flowing through the flow rate control valve. Subsequently, when the motor is further rotated, the communication port of the rotary disk and the communication port , having any of sizes, of the fixed disk are matched in position and gas communication through the flow rate control valve is allowed. The rotational angular range of the motor in which the gas communication is allowed is to be a flow rate control range.

The gas valve disclosed in Patent Literature 1 has a structure that the rotary disk and the cam member are rotated along with the rotary shaft of the motor in the safety valve operation range. Therefore, a disk closing face at least having a size corresponding to the safety valve operation range is required to be arranged at the rotary disk. As a result, there has been a problem that the flow rate control range is narrowed and flexibility of gas flow rate control is limited.

In view of the above, there has been proposed a technology to overlap a safety valve operation range and a flow rate control range in part enabling to widen the flow rate control range by the overlapped amount (e.g., Patent Literature 2). In a gas valve disclosed in Patent Literature 2, a gap is formed between a first engaging portion of a cam member to which an engaging projection of a rotary shaft is abutted when a motor is positively rotated and a second engaging portion of a cam member to which the engaging projection is abutted when the motor is reversely rotated. According to the gap, a reversely-rotated amount of the cam member is reduced even when the rotary shaft is reversely rotated enabling the safety valve operation range and the flow rate control range to be overlapped in part. Said valve discloses the preamble of claim 1.

Patent Literature 1: Japanese Patent Application Laid-Open No. 2002-323218
Patent Literature 2: Japanese Patent Application Laid-Open No. 2006-189231

### SUMMARY OF THE INVENTION

There has been a problem for the gas valve disclosed in Patent Literature 2 that a disk closing function is lost owing to that a gas flows to the downstream side through the flow rate control valve in the overlapped range, even in the safety valve operation range in which the safety valve is operated, being overlapped to the flow rate control range.

Further, in a case that an operation of the gas valve is stopped due to occurrence of any failure when a motor rotational angle is in the overlapped range of the safety valve operation range and the flow rate control range, the motor rotational angle thereat cannot be determined whether corresponding to the safety valve operation range or corresponding to the flow rate control range. Therefore, there has been a problem that detection error whether being in the safety valve operation range or being in the flow rate control range may occur when the gas valve operation is restarted and the error cannot be immediately corrected.

To address the above issue, an object of the present invention is to reduce the disk closing face in size and to widen the flow rate control range without arranging an overlapped range of the safety valve operation range and the flow rate control range.

To resolve the abovementioned problem, the present invention provides a gas control valve according to claim 1 which is configured to perform open-close operations of a flow rate control valve and a safety valve with one motor and to include a rotary disk and a fixed disk as a shutoff-function-provided rotating member to prohibit gas communication through the flow rate control valve in a safety valve operation range. Here, a rotary shaft of the motor is set at a position being offset from an extension line of a movement axis of an operation rod which moves the safety valve in a front-back direction. The operation rod is advanced by rotating the motor in one direction and is retracted by rotating the motor in a direction opposite to the one direction.

In another aspect of the present invention, there is provided a transmission interruption unit for interrupting power transmission from the motor to the rotary disk in a power non-transmission range which includes the safety valve operation range.

According to the present invention structured as described above, since a rotational angular range of the motor for advancing the safety valve with the operational rod and a rotational angular range of the motor for retracting the safety valve are overlapped, the safety valve operation range can be narrowed by the overlapped amount. Since the safety valve operation range can be narrowed, the disk closing face can be reduced in size and the flow rate control range can be widened without arranging an overlapped range of the safety valve operation range and the flow rate control range.

According to the other aspect of the present invention, since rotation of the rotary disk is stopped in the power non-transmission range which includes the safety valve operation range, the disk closing face is not required to be arranged in the power non-transmission range which is wider than the safety valve operation range. Accordingly, the flow rate control range can be further widened while further reducing the disk closing face in size.

### BRIEF DESCRIPTION OF THE DRAWINGS

FIG. 1 is a schematic view illustrating main structure of a gas control valve according to an embodiment.
FIG. 2 is a sectional view of the gas control valve according to the present embodiment.
FIG. 3 is a sectional view at A-A of the gas control valve in FIG. 2.
FIG. 4 is a view illustrating a structural example of a distance varying unit provided in the gas control valve according to the present embodiment.
FIG. 5 is a view illustrating operational states of the distance varying unit according to the present embodiment.
FIG. 6 is a timing chart illustrating an operational example of the gas control valve according to the present embodiment.
FIG. 7 is a view illustrating states of the gas control valve at respective timings indicated by I) to V) in the timing chart of FIG. 6.
FIG. 8 is a view illustrating states of the gas control valve at respective timings indicated by I) to III) and *1 in the timing chart of FIG. 6.
FIG. 9 is a view illustrating states of the gas control valve at respective timings indicated by I), IV), V), *2, and *3 in the timing chart of FIG. 6.
FIG. 10 is a view illustrating states of the gas control valve at respective timings indicated by I) and II) in the timing chart of FIG. 6.
FIG. 11 is a view illustrating states of the gas control valve at respective timings indicated by I) to V) and *1 to *3 in the timing chart of FIG. 6.

### EMBODIMENT OF THE INVENTION

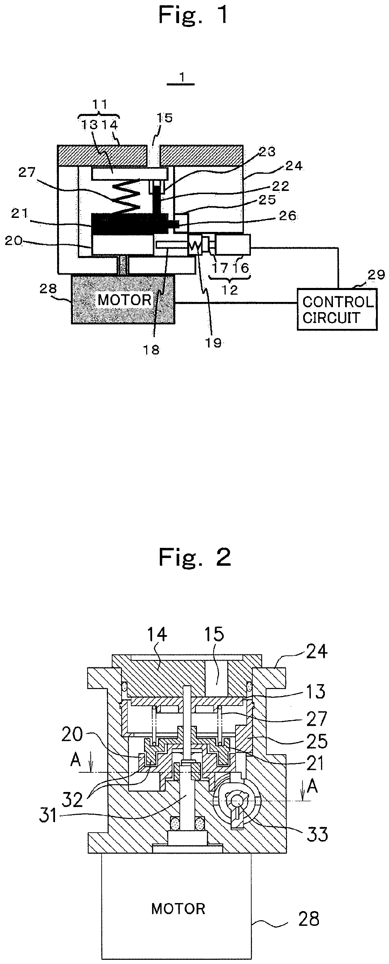

In the following, an embodiment of the present invention will be described with reference to the drawings. FIG. 1 is a schematic view illustrating a main structure of a gas control valve 1 according to the present embodiment. The gas control valve 1 of the present embodiment is applied to gas equipment such as a gas stove as including a flow rate control valve 11 for controlling a gas supply flow rate and a safety valve 12 for blocking gas supply.

The gas control valve 1 of the present embodiment is configured to perform open-close operations of the flow rate control valve 11 and the safety valve 12 with a single motor 28. The flow rate control valve 11 includes a shutoff-function-provided rotating member to prohibit gas communication in a safety valve operation range being a rotational angular range in which the safety valve 12 is operated by the motor 28. The shutoff-function-provided rotating member includes a rotary disk 13 which is rotated along with rotation of the motor 28 and a fixed disk 14 which is arranged as being opposed to the rotary disk 13.

The safety valve 12 includes a magnet case 16. The magnet case 16 accommodates an electromagnet which is magnetized based on a signal from a control circuit 29 and a sticking piece to be stuck thereto. A valve body 17 protruded to the downstream side from the magnet case 16 is linked to the sticking piece. In a state that the safety valve 12 is closed, the valve body 17 blocks a gas passage in a state of being urged to the downstream side by a return spring (not illustrated).

An opening operation of the safety valve 12 is performed with an operation rod 18 which is movable in a front-back direction of the gas passage (lateral direction in FIG. 1). The operation rod 18 is moved to the upstream side by a link member 20 which is rotated along with the motor 28 and pushes the valve body 17, so that the gas passage is in an opened state. That is, the safety valve 12 is in an opened state.

The link member 20 is configured to operate the safety valve 12 by advancing and retracting the operation rod 18 urged to the downstream side by a spring 19 in the front-back direction of the gas passage. That is, when the motor 28 is rotated in one direction, the link member 20 is rotated as being interlocked therewith and the operation rod 18 is advanced to the upstream side by a link lever portion (not illustrated) protruded toward the operation rod 18 to open the safety valve 12. Subsequently, the operation rod 18 is retracted by rotating the motor 28 in a direction opposite to the one direction while the safety valve 12 is kept in the opened state with the electromagnet in the magnet case 16 magnetized with a signal from the control circuit 29.

The safety valve operation range denotes a rotational angular range of the motor 28 from starting of advancing of the operation rod 18 to retracting thereof to the original position. Here, when magnetizing of the electromagnet is cancelled with a signal from the control circuit 29, the valve body 17 is moved to the downstream side with a force of the return spring and the safety valve 12 returns into the closed state.

A fixed-side communication port 15 having constant opening area is formed at the fixed disk 14. Meanwhile, a rotating-side communication port (not illustrated) whose opening area is gradually varied along a circumferential direction is formed at the rotary disk 13. When the rotary disk 13 is rotated to match a position of the rotating-side communication port with a position of the fixed-side communication port 15, gas supplied from the upstream side (right side in FIG. 1) of the safety valve 12 flows toward a gas burner (not illustrated) (upward in FIG. 1) via the rotating-side communication port and the fixed-side communication port 15. A flow rate control range denotes a rotational angular range of the motor 28 in which gas communication is allowed between the rotary disk 13 and the fixed disk 14.

Further, the gas control valve 1 of the present embodiment includes a carriage member 21, between the link member 20 and the rotary disk 13, which transmits power from the motor 28 to the rotary disk 13 as being rotated along with the link member 20. A power transmission shaft 22 is arranged on a face of the carriage member 21 at the side of the rotary disk 13. Meanwhile, a power transmission bearing 23 is arranged on a face of the rotary disk 13 at the side of the carriage member 21. A part of the power transmission shaft 22 at the top end side is inserted to the power transmission bearing 23. The power transmission shaft 22 is configured to be movable in the upper-lower direction at the inside of the power transmission bearing 23.

Further, the gas control valve 1 of the present embodiment includes a transmission interruption unit for interrupting power transmission from the motor 28 to the rotary disk 13 in the safety valve operation range. For example, the transmission interruption unit includes a stopper 25 which is arranged at a case 24 of the gas control valve 1 and an engaging portion 26 which is arranged at the carriage member 21 to stop rotation of the carriage member 21 as being engaged with the stopper 25.

According to the transmission interruption unit arranged as described above, at least in the safety valve operation range, rotation of the carriage member 21 is stopped and the link member 20 is solely rotated independently from the carriage member 21, so that the safety valve 12 is operated. A power non-transmission range denotes a rotary angular range of the motor 28 in which rotation of the carriage member 21 is stopped and power transmission thereof to the rotary disk 13 is interrupted. In contrast, in the flow rate control range being a range in which the flow rate control valve 11 is operated by the motor 28, the carriage member 21 is rotated as being interlocked with the link member 20 and transmits power of the motor 28 to the rotary disk 13.

Further, the gas control valve 1 of the present embodiment further includes an adhesion varying unit for varying adhesion of the rotary disk 13 to the fixed disk 14, so that adhesion in the safety valve operation range and adhesion in the flow rate control range are caused to differ to each other. It is preferable that the adhesion is maximized in the safety valve operation range and is minimized in the flow rate control range.

For example, the adhesion varying unit includes a spring member 27 arranged between the carriage member 21 and the rotary disk 13 and a distance varying unit for varying a distance between the carriage member 21 and the rotary disk 13. When the distance between the carriage member 21 and the rotary disk 13 is shortened by the distance varying unit, the spring member 27 is compressed and an urging force to the rotary disk 13 is enlarged. Accordingly, the adhesion of the rotary disk 13 to the fixed disk 14 is enlarged.

In contrast, when the distance between the carriage member 21 and the rotary disk 13 is enlarged by the distance varying unit, the spring member 27 is extended and the urging force to the rotary disk 13 is lessened. Accordingly, the adhesion of the rotary disk 13 to the fixed disk 14 is lessened. A detailed structural example of the distance varying unit will be described later.

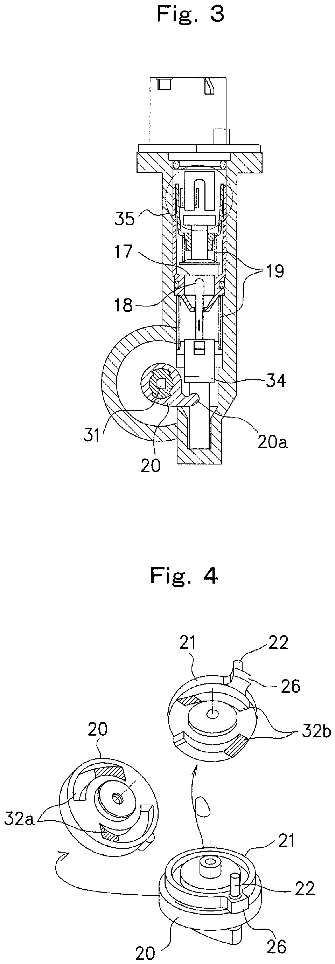

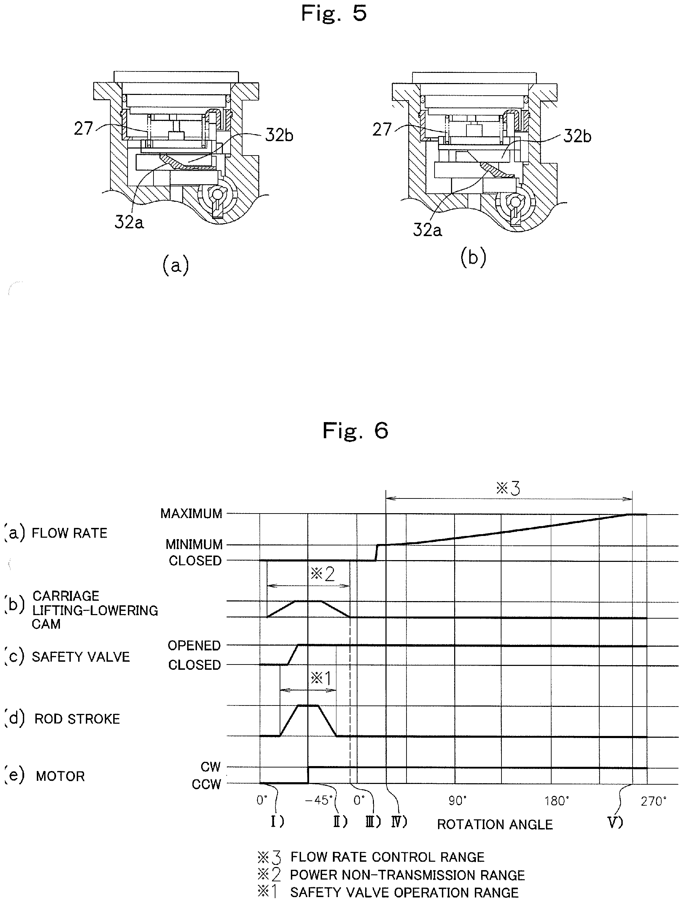

FIGs. 2 to 5 are views illustrating a specific structural example of the gas control valve 1 of the present embodiment. FIG. 2 is a sectional view of the gas control valve 1 of the present embodiment. FIG. 3 is a sectional view at A-A of the gas control valve 1 in FIG. 2. FIG. 4 is a view illustrating a structural example of the distance varying unit provided in the gas control valve 1 of the present embodiment. FIG. 5 is a view illustrating operational states of the distance varying unit. In FIGs. 2 to 5, the same reference is given to a structural element having the same function as a structural element illustrated in FIG. 1.

As illustrated in FIGs. 2 and 3, the link member 20 is linked to a motor rotary shaft 31 to be rotated along with rotation of the motor 28. The carriage member 21 is linked to the link member 20 to be rotated along with rotation of the motor 28 via the link member 20. A carriage lifting-lowering cam unit 32 as the distance varying unit is arranged at the link member 20 and the carriage member 21. The carriage lifting-lowering cam unit 32 also has a function to link the link member 20 and the carriage member 21.

As illustrated in FIGs. 4 and 5, the carriage lifting-lowering cam unit 32 includes a link cam portion 32a which is arranged at one face of the link member 20 (a face opposed to the carriage member 21) and a carriage cam portion 32b which is arranged at one face of the carriage member 21 (a face opposed to the link member 20).

The link cam portion 32a includes two concave portions formed along a circumferential direction of the link member 20. One end of the concave portion is formed as an approximately perpendicular face and the other end thereof is formed as an inclined face (taper face) having a predetermined angle. The carriage cam portion 32b includes two convex portions formed along a circumferential direction of the carriage member 21. One end of the convex portion is formed as an approximately perpendicular face and the other end is formed as an inclined face (taper face) having a predetermined angle.

The concave portions of the link cam portion 32a and the convex portions of the carriage cam portion 32b are formed approximately the same in size and the taper faces thereof have approximately the same inclination as well. Here, as illustrated in FIG. 5(a), the link cam portion 32a and the carriage cam portion 32b are just-fitted to each other, so that the link member 20 and the carriage member 21 are rotated as being interlocked with each other. That is, in a state that the link member 20 and the carriage member 21 are rotated as being interlocked with each other without the engaging portion 26 of the carriage member 21 engaged with the case 24, the link cam portion 32a and the carriage cam portion 32b are fitted to each other and the carriage member 21 is in a lowered state as illustrated in FIG. 5(a).

Further, the taper face formed at the link cam portion 32a and the taper face formed at the carriage cam portion 32b are arranged to be opposed to each other. When predetermined or larger forces are exerted along the taper faces in mutually opposite directions, the carriage cam portion 32b is slid along the taper face to be raised onto a flat portion where the link cam portion 32a of the link member 20 is not formed, as illustrated in FIG. 5(b). Thus, the carriage member 21 is to be in a lifted state. Here, the spring member 27 is in a compressed state compared to the lowered state in FIG. 5(a).

That is, in the present embodiment, in a case that the carriage member 21 is not to be rotated even when the motor 28 is rotated owing to that the engaging portion 26 of the carriage member 21 is engaged with the stopper 25 of the case 24, the link member 20 is in a state of being solely rotatable independently from the carriage member 21. In this case, the engagement of the carriage lifting-lowering cam unit 32 is released and the carriage cam portion 32b is raised onto the flat portion of the link member 20, so that the carriage member 21 is to be in the lifted state.

As illustrated in FIGs. 2 and 3, in the present embodiment, the motor rotary shaft 31 being at the rotational center of the link member 20 and the carriage member 21 does not exist on an extension line of a rod movement axis 33 on which the operation rod 18 moves in the front-back direction of the gas passage. The motor rotary shaft 31 is arranged at a position being offset from the rod movement axis 33. The link member 20 linked to the motor rotary shaft 31 includes a link lever portion 20a which is protruded toward the rod movement axis 33. When the link member 20 is rotated along with the motor 28, the link lever portion 20a performs a pushing operation on a slider 34 and the operation rod 18 linked to the slider 34 is to be advanced and retracted in the front-back direction of the gas passage.

In the gas valve disclosed in Patent Literature 1 or 2 as a related art, the motor rotary shaft is located on an extension line of the rod movement axis. A profile diameter of the cam member which is attached to the motor rotary shaft is formed so that a diameter from the motor rotary shaft to one point on the profile is different from a diameter therefrom to another point on the profile. Then, the operation rod is moved in the front-back direction by utilizing profile diameter variation, on the rod movement axis, of the cam member which is rotated along with the motor rotary shaft.

First, owing to that the motor is rotated in one direction, a portion of the cam member having a large profile diameter (hereinafter, called a large-diameter portion) performs a pushing operation on the operation rod and advances the operation rod in a valve-opening direction. Subsequently, when the motor is further rotated in the one direction, a portion of the cam member having a small profile diameter (hereinafter, called a small-diameter portion) is rotated onto the rod movement axis and the operation rod is retracted to an original position accordingly.

According to such a structure, when the motor is rotated in a direction opposite to the one direction after the operation rod is retracted to the original position, the large-diameter portion of the cam member passes through the rod movement axis again and operations of valve-opening and valve-closing are to be performed while the operation rod is moved again in the front-back direction. Therefore, the motor cannot be reversely rotated. For this reason, in the gas valve disclosed in Patent Literature 1 or 2, the motor is configured to be rotated only in one direction. In contrast, in the gas control valve 1 of the present embodiment, since the motor rotary shaft 31 is set at a position being offset from the rod movement axis 33, the motor 28 can be rotated in both directions.

As described above, the valve body 17 of the safety valve 12 is arranged ahead (at the upstream side) of the operation rod 18. Owing to that the moved operation rod 18 pushes the valve body 17, the gas passage is in an opened state. An electromagnet 35 for keeping the safety valve 12 in the opened state is arranged further ahead the valve body 17.

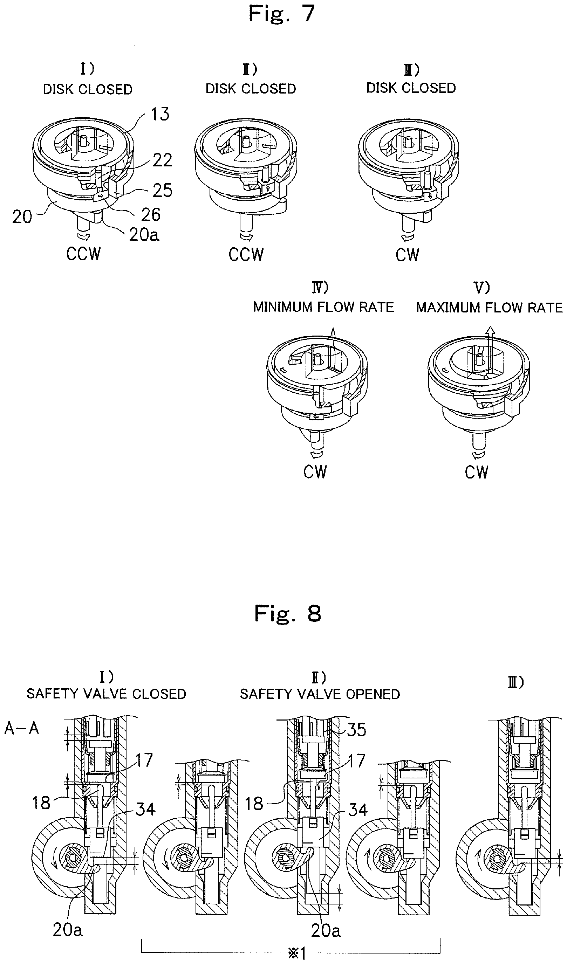

Next, operations of the gas control valve 1 of the present embodiment structured as described above will be described. FIGs. 6 to 11 are views illustrating operational examples of the gas control valve 1 of the present embodiment. Among the above, FIG. 6 is a timing chart. Further, FIGs. 7 to 11 are views illustrating states of the gas control valve 1 at respective timings indicated by I) to V) and *1 to *3 in the timing chart of FIG. 6.

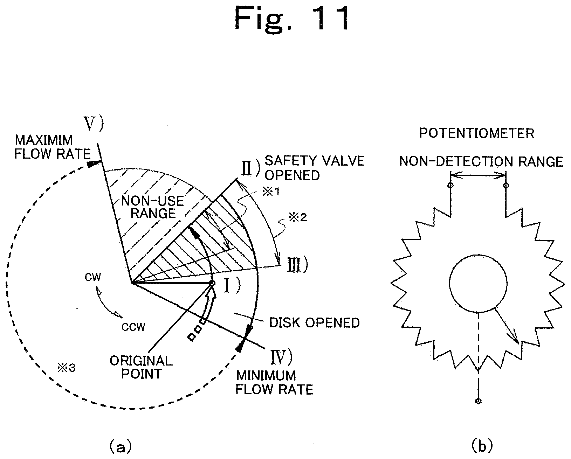

Here, a non-use range illustrated in FIG. 11 (a) is a range where a non-detection range between terminals corresponding to leg portions of an Ω-type is allocated in a case that an Ω-type potentiometer (phase sensor) as illustrated in FIG. 11(b) is arranged for detecting a rotation angle of the motor 28.

First, as illustrated in FIG. 6(e), the motor 28 is rotated in reverse (CCW) at timing I). Right after starting of rotation of the motor 28, the link lever portion 20a is not abutted to the slider 34 (see FIG. 8-I), so that the operation rod 18 is not moved to the upstream side as illustrated in FIG. 6(d). Accordingly, the valve body 17 of the safety valve 12 is in the closed state as illustrated in FIG. 6(c) (see FIG. 8-I)).

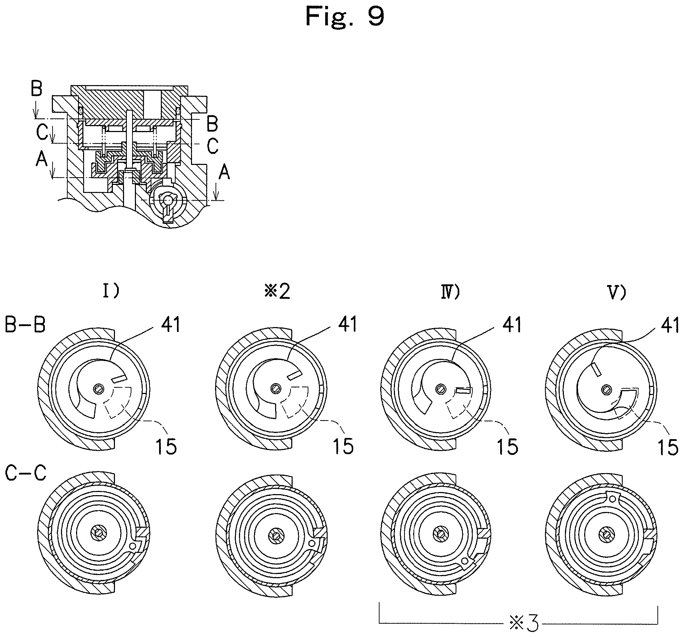

Further, at timing I), the link cam portion 32a and the carriage cam portion 32b are fitted to each other, so that the carriage lifting-lowering cam unit 32 is in the lowered state as illustrated in FIG. 6 (b) (see FIGs. 7-I and 10-I)). Further, as illustrated in FIG. 9-I), the fixed-side communication port 15 arranged at the fixed disk 14 and the rotating-side communication port 41 arranged at the rotary disk 13 are completely deviated in position. Accordingly, as illustrated in FIG. 6(a), the flow rate control valve 11 is completely in a closed state.

Subsequently, when the motor 28 continues to be rotated in reverse, the engaging portion 26 of the carriage member 21 is abutted to and engaged with the stopper 25 of the case 24 and the rotation of the carriage member 21 is stopped. When the motor 28 further continues to be rotated in reverse from the above state, the link member 20 solely continues to be rotated independently from the carriage member 21 which is in a stopped state. In this case, as illustrated at an early stage of *2 in FIG. 6(b), the carriage cam portion 32b is slid along the taper face and is raised onto the flat portion of the link member 20, so that the carriage lifting-lowering cam unit 32 is in the lifted state (see FIGs. 7-II and 10-II)).

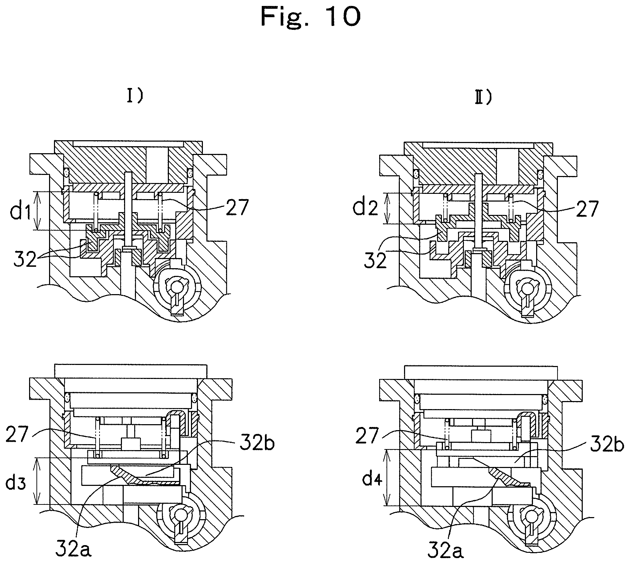

When the carriage lifting-lowering cam unit 32 is in the lifted state, the spring member 27 arranged between the carriage member 21 and the rotary disk 13 is in the compressed state. That is, as illustrated in FIGs. 10-I) and 10-II), a length d2 of the spring member 27 while the carriage lifting-lowering cam unit 32 is in the lifted state is smaller than a length d1 of the spring member 27 while the carriage member 32 is in the lowered state. Accordingly, a stronger force is exerted from the spring member 27 to the rotary disk 13. As a result, the adhesion of the rotary disk 13 to the fixed disk 14 becomes larger than that when the carriage lifting-lowering cam unit 32 is in the lowered state.

Further, when the link member 20 is solely rotated independently from the carriage member 21 and the link lever portion 20a pushes the slider 34 owing to the rotation of the link member 20, the operation rod 18 is moved to the upstream side as illustrated at an early stage of *1 in FIG. 6(d). As a result, the safety valve 12 is shifted into the opened state as illustrated in FIG. 6(c) (see FIG. 8-II)). Owing to that the electromagnet 35 is magnetized with a signal from the control circuit 29 in the above state, the safety valve 12 is kept in the opened state.

Next, the rotation of the motor 28 is switched to a forward rotation (CW) at timing II) in FIG. 6 (e) while keeping the safety valve 12 in the opened state with the force of the electromagnet 35. Accordingly, as illustrated at a later stage of *1 in FIG. 6 (d), the operation rod 18 is retracted to the downstream side. Further, as illustrated at a later stage of *2 in FIG. 6(b), the carriage cam portion 32b is slid along the taper face in the direction opposite to the above. As a result, the link cam portion 32a and the carriage cam portion 32b are fitted to each other, so that the carriage lifting-lowering cam unit 32 is in the lowered state (see FIGs. 7-III and 10-I)).

In the above operations, the rotational angular range of the motor 28 from starting of advancing of the operation rod 18 to the upstream side to retracting thereof to the original position is denoted as the safety valve operation range indicated by *1 in FIGs. 6, 8 and 11 (a). Further, from starting of lifting of the carriage cam portion 32b along the taper face to be in the lifted state to subsequent lowering thereof along the taper face to be in the lowered state again, the rotation of the carriage member 21 is stopped and the link member 20 is solely rotated. Here, the power of the motor 28 is not transmitted to the rotary disk 13 via the carriage member 21. Such a rotational angular range is denoted as the power non-transmission range indicated by *2 in FIGs. 6, 9, and 11(a).

After passing through the power non-transmission range, the motor 28 continues to be rotated forwardly (CW). Then, as illustrated in FIGs. 7-IV) and 9-IV), a part of the fixed-side communication port 15 formed at the fixed disk 14 and a part of the rotating-side communication port 41 formed at the rotary disk 13 are matched in position. Thus, as illustrated in FIG. 6(a), the flow rate control valve 11 is shifted into a state of allowing gas communication at a minimum flow rate (see FIGs. 7-IV) and 11(a)-IV)).

When the motor 28 further continues to be forwardly rotated, communicated area between the fixed-side communication port 15 and the rotating-side communication port 41 are increased and the gas flow rate is increased accordingly. Timing V) indicated respectively in FIGs. 6, 7, 9, and 11(a) indicates a state in which the gas flow rate allowed with the communication is maximized.

The rotational angular range of the moor 28 while the gas communication is allowed (between the minimum state and the maximum state of the gas flow rate) with the fixed-side communication port 15 and the rotating-side communication port 41 matched in position is denoted as the flow rate control range indicated by *3 in FIGs. 6, 9, and FIG. 11 (a). As is clear from FIGs. 6 and 11(a), the flow rate control range indicated by *3 is considerably larger than the safety valve operation range indicated by *1.

Not illustrated in FIG. 6, for returning the rotation angle of the motor 28 to the original point with an extinction action, the motor 28 whose rotation angle is at any position in the flow rate control range is reversely rotated (CCW).

As described above in detail, in the present embodiment, in the gas control valve 1 including the rotary disk 13 and the fixed disk 14 as the shutoff-function-provided rotating member to prohibit gas communication through the flow rate control valve 11 in the safety valve operation range, the motor rotary shaft 31 is set at a position being offset from an extension line of the rod movement axis 33 and the operation rod 18 is advanced by reversely rotating (CCW) the motor 28 and is retracted by forwardly rotating (CW) the motor 28.

According to the present embodiment structured as described above, since the rotational angular range of the motor 28 for advancing the safety valve 12 with the operational rod 18 and the rotational angular range of the motor 28 for retracting the safety valve 12 are overlapped (*1 in FIG. 11(a)), the safety valve operation range can be narrowed by the overlapped amount. Since the safety valve operation range can be narrowed, the disk closing face can be reduced in size and the flow rate control range can be widened without arranging an overlapped range of the safety valve operation range and the flow rate control range. Accordingly, flexibility of flow rate control can be improved as widening the flow rate control range without causing a disk closing function to be lost and a problem of detection error whether being in the safety valve operation range or in the flow rate control range at the time of restarting after failure occurrence.

Further, in the present embodiment, there is provided the transmission interruption unit for interrupting power transmission from the motor 28 to the rotary disk 13 in the power non-transmission range (*2 in FIG. 11(a)) which includes the safety valve operation range. According to the above structure, since rotation of the rotary disk 13 is stopped in the power non-transmission range which is wider than the safety valve operation range, the disk closing face is not required to be arranged in the wide power non-transmission range. Accordingly, the flow rate control range can be further widened while further reducing the disk closing face in size.

Further, in the present embodiment, the motor 28 is configured to be rotated in two directions as forward rotation and reverse rotation. Therefore, as illustrated in FIG. 11(a), a metal-made brush being a slider which is rotated along with the motor rotary shaft 31 is prevented from passing through the non-detection range of the potentiometer when the rotation angle of the motor 28 is returned to the original position with the extinction action. Accordingly, there is an advantage as well to improve durability of the potentiometer. According to the structure that the motor 28 is rotated only in one direction as the gas valve disclosed in Patent Literature 1 or 2 described as the related art, the brush passes through the non-detection range of the potentiometer each time with the extinction action and durability thereof is deteriorated.

Further, in the above description, the abovementioned embodiment includes both of the structure to rotate the motor 28 in two direction as forward rotation and reverse rotation with the motor rotary shaft 31 and the rod movement axis 33 arranged at offset positions and the structure to include the transmission interruption unit for interrupting power transmission from the motor 28 to the rotary disk 13 in the power non-transmission range. However, the present invention is not limited thereto. Although it is most desirable to include both the structures, the transmission interruption unit may be eliminated. Even in a case that the transmission interruption unit is not arranged, it is possible to widen the flow rate control range compared to the related art.

Further, in the abovementioned embodiment, the adhesion varying unit is arranged in addition to the transmission interruption unit. However, the present invention is not limited thereto. For example, it is also possible that the adhesion varying unit is eliminated and the adhesion of the rotary disk 13 to the fixed disk 14 is kept the same as the adhesion when the carriage lifting-lowering cam unit 32 is in the lifted state.

Each of the abovementioned embodiments is simply a specific example to actualize the present invention. The technical scope of the present invention should not be construed to be limited thereto. The present invention can be actualized variously without departing from the substance or the main features thereof.

## Claims

1. A gas control valve (1) comprising:
a flow rate control valve (11) and a motor (28) which is configured to perform open-close operations of the flow rate control valve (11) for controlling a gas supply flow rate and a safety valve (12) for blocking gas supply, and
an operation rod (18) which is configured to operate the safety valve (12) as being moved in a front-back direction of a gas passage by a link member (20) rotating along with the motor (28),
wherein the flow rate control valve (11) includes a shutoff-function-provided rotating member to prohibit gas communication in a safety valve operation range being a rotational angular range in which the safety valve (12) is operated by the motor (28),
the shutoff-function-provided rotating member includes a rotary disk (13) which is rotated along with rotation of the motor (28) and a fixed disk (14) which is arranged as being opposed to the rotary disk (13), **characterized in that**, a motor rotary shaft (31) to be a rotation center of the link member (20) is set at a position being offset from an extension line of a rod movement axis on which the operation rod (18) is advanced and retracted, and
the operation rod (18) is advanced by the link member (20) while rotating the motor (28) in one direction in the safety valve operation range and is retracted by the link member (20) while rotating the motor (28) in a direction opposite to the one direction in the safety valve operation range.

2. The gas control valve (1) according to claim 1,
wherein the link member (20) includes a link lever portion which is protruded toward the rod movement axis, and
the operation rod (18) is advanced and retracted in the front-back direction of the gas passage by action of the link lever portion when the link member (20) is rotated along with the motor (28).

3. The gas control valve (1) according to claim 1, further comprising a transmission interruption unit configured to interrupt power transmission from the motor (28) to the rotary disk (13) in a power non-transmission range which includes the safety valve operation range.

4. The gas control valve (1) according to claim 3, further comprising a carriage member (21) arranged between the link member (20) and the rotary disk (13) to transmit power from the motor (28) to the rotary disk (13) as being rotated along with the link member (20), and
the transmission interruption unit includes a stopper (25) which is arranged at a case (24) of the gas control valve (1) and an engaging portion (26) which is arranged at the carriage member (21) so that the engaging portion (26) stops rotation of the carriage member (21) by being engaged with the stopper (25).

## Patentansprüche

1. Gasregelventil (1) mit:
einem Durchflussregelventil (11) und
einem Motor (28), der konfiguriert ist, Öffnungs-/Schließvorgänge des Durchflussregelventils (11) zum Regeln einer Gaszufuhrdurchflussmenge und eines Sicherheitsventils (12) zum Sperren der Gaszufuhr durchzuführen, und
einem Betätigungsstab (18), der konfiguriert ist, das Sicherheitsventil (12) zu betätigen, wenn er in eine Vorwärts-/Rückwärtsrichtung eines Gaskanals durch ein Verbindungselement (20) bewegt wird, das sich zusammen mit dem Motor (28) dreht,
wobei das Durchflussregelventil (11) ein mit einer Absperrfunktion versehenes Drehelement aufweist, um eine Gasverbindung in einem Sicherheitsventilbetriebsbereich zu verhindern, der ein Drehwinkelbereich ist, in dem das Sicherheitsventil (12) durch den Motor (28) betätigt wird,
das mit einer Absperrfunktion versehene Drehelement eine Drehscheibe (13), die zusammen mit der Rotation des Motors (28) gedreht wird, und eine feststehende Scheibe (14) aufweist, die so angeordnet ist, dass sie der Drehscheibe (13) gegenüberliegt, **dadurch gekennzeichnet, dass**
eine Motordrehwelle (31), die ein Drehmittelpunkt des Verbindungselements (20) sein soll, an einer Position angeordnet ist, die von einer Verlängerungslinie einer Stabbewegungsachse versetzt ist, auf der der Betätigungsstab (18) vorgeschoben und zurückgezogen wird, und
der Betätigungsstab (18) durch das Verbindungselement (20) vorgeschoben wird, während sich der Motor (28) im Sicherheitsventilbetriebsbereich in eine Richtung dreht, und durch das Verbindungselement (20) zurückgezogen wird, während sich der Motor (28) im Sicherheitsventilbetriebsbereich in eine zu der einen Richtung entgegengesetzte Richtung dreht.

2. Gasregelventil (1) nach Anspruch 1,
wobei das Verbindungselement (20) einen Verbindungshebelabschnitt aufweist, der zur Stabbewegungsachse vorsteht, und
der Betätigungsstab (18) in die Vorwärts-/Rückwärtsrichtung des Gaskanals durch die Funktion des Verbindungshebelabschnitts vorgeschoben und zurückgezogen wird, wenn das Verbindungselement (20) zusammen mit dem Motor (28) gedreht wird.

3. Gasregelventil (1) nach Anspruch 1, das ferner eine Übertragungsunterbrechungseinheit aufweist, die konfiguriert ist, die Kraftübertragung vom Motor (28) auf die Drehscheibe (13) in einem Kraftnichtübertragungsbereich zu unterbrechen, der den Sicherheitsventilbetriebsbereich umfasst.

4. Gasregelventil (1) nach Anspruch 3, das ferner ein Schlittenelement (21) aufweist, das zwischen dem Verbindungselement (20) und der Drehscheibe (13) angeordnet ist, um Kraft vom Motor (28) auf die Drehscheibe (13) zu übertragen, wenn es zusammen mit dem Verbindungselement (20) gedreht wird, und
die Übertragungsunterbrechungseinheit einen Anschlag (25), der an einem Gehäuse (24) des Gasregelventils (1) angeordnet ist, und einen Eingriffsabschnitt (26) aufweist, der am Schlittenelement (21) angeordnet ist, so dass der Eingriffsabschnitt (26) die Drehung des Schlittenelements (21) stoppt, indem er mit dem Anschlag (25) in Eingriff tritt.

## Revendications

1. Soupape de commande de gaz (1), comprenant :
une soupape de réglage de débit (11) et
un moteur (28) prévu pour effectuer les opérations d'ouverture et de fermeture de la soupape de réglage de débit (11) pour ajuster un débit de refoulement de gaz, et une soupape de sécurité (12) pour arrêter le refoulement du gaz, et
une tige d'actionnement (18) prévue pour actionner la soupape de sécurité (12) par déplacement dans les directions vers l'avant et vers l'arrière d'un passage de gaz par un élément de liaison (20) tournant avec le moteur (28),
où la soupape de réglage de débit (11) comprend un élément rotatif à fonction d'arrêt pour empêcher une communication gazeuse dans une plage d'actionnement de la soupape de sécurité qui est une plage angulaire de rotation où la soupape de sécurité (12) est actionnée par le moteur (28),
l'élément rotatif à fonction d'arrêt comprend un disque rotatif (13) entraîné en rotation par la rotation du moteur (28) et un disque fixe (14) disposé en opposition au disque rotatif (13),
**caractérisée**
**en ce qu'**un arbre rotatif (31) du moteur qui est un centre de rotation de l'élément de liaison (20) est ajusté sur une position décalée par rapport à une ligne d'extension d'un axe de déplacement de tige sur lequel la tige d'actionnement (18) est avancée et reculée, et
**en ce que** la tige d'actionnement (18) est avancée par l'élément de liaison (20) lorsque le moteur (28) tourne dans une direction dans la plage d'actionnement de la soupape de sécurité, et est reculée par l'élément de liaison (20) lorsque le moteur (28) tourne dans une direction opposée à la première direction dans la plage d'actionnement de la soupape de sécurité.

2. Soupape de commande de gaz (1) selon la revendication 1,
où l'élément de liaison (20) comprend un segment de levier de liaison en saillie vers l'axe de déplacement de tige, et où
la tige d'actionnement (18) est avancée et reculée dans les directions vers l'avant et vers l'arrière du passage de gaz par action du segment de levier de liaison quand l'élément de liaison (20) est entraîné en rotation par le moteur (28).

3. Soupape de commande de gaz (1) selon la revendication 1, comprenant en outre une unité d'interruption de transmission prévue pour interrompre la transmission de puissance du moteur (28) au disque rotatif (13) dans une plage de non-transmission de puissance incluant la plage d'actionnement de la soupape de sécurité.

4. Soupape de commande de gaz (1) selon la revendication 3, comprenant en outre un élément de transfert (21) disposé entre l'élément de liaison (20) et le disque rotatif (13) pour transmettre la puissance du moteur (28) au disque rotatif (13) par rotation avec l'élément de liaison (20), et où
l'unité d'interruption de transmission comprend une butée (25) disposée sur un boîtier (24) de la soupape de commande de gaz (1), et une section d'engagement (26) disposée sur l'élément de transfert (21) de sorte que ladite section d'engagement (26) arrête la rotation de l'élément de transfert (21) en contactant la butée (25).
